(19) Europäisches Patentamt
European Patent Office
Office européen des brevets

(11) Publication number: 0 219 325
A2

(12) # EUROPEAN PATENT APPLICATION

(21) Application number: 86307854.9

(22) Date of filing: 10.10.86

(51) Int. Cl.⁴: C 08 G 18/12
C 08 G 18/32, C 08 K 5/52
C 09 J 3/16

(30) Priority: 10.10.85 IT 2242985

(43) Date of publication of application:
22.04.87 Bulletin 87/17

(84) Designated Contracting States:
AT BE CH DE FR GB LI NL SE

(71) Applicant: A.TE.CA. S.r.l.
31, Foro Buonaparte
Milan(IT)

(72) Inventor: Pallozzi, Franco
18, via Duca degli Abruzzi
I-20059 Vimercate Milan(IT)

(72) Inventor: Manucra, Fortunato
59, via Vittorio Veneto
I-21053 Castellanza Varese(IT)

(72) Inventor: Turco, Pietro
13, via Venezia
I-21052 Busto Arsizio Varese(IT)

(74) Representative: Whalley, Kevin et al,
MARKS & CLERK 57/60 Lincoln's Inn Fields
London WC2A 3LS(GB)

(54) **Process for the preparation of polyurethane adhesives for packing, and polyurethane adhesives thus obtained.**

(57) A process for the preparation of polyurethane adhesives for packing by preparing a prepolymer starting from a diisocyanate of general formula:

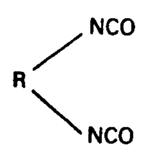

(1)

wherein R is an aromatic radical containing from 1 to 13 carbon atoms and from a glycol or glycols having an average molecular weight of up to 2000, and thereafter reacting the prepolymers with a N-substituted dialkanolamine of general formula:

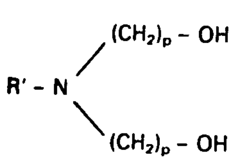

(2)

wherein R' is an alkyl, aromatic or alkylaromatic radical containing from 1 to 12 carbon atoms and p is an integer from 1 to 4.

EP 0 219 325 A2

M&C FOLIO: 799P53079 WANGDOC: 0385a

# PROCESS FOR THE PREPARATION OF POLYURETHANE ADHESIVES FOR PACKING, AND POLYURETHANE ADHESIVES THUS OBTAINED

This invention relates to a process for the preparation of polyurethane adhesives for packing, and to polyurethane adhesives thus obtained.

In the flexible packing field there are used large quantities of adhesives for coupling films of different types, such as plastics films based on polyethylene, polypropylene or polyamide, metallic films, essentially aluminium films, or metallized plastics materials to obtain materials having high mechanical properties, with light and gas barrier effect, as well as sparkling properties and therefore a good aesthetic-advertising effect.

The thus obtained films are suitable for packing many foodstuffs and non-alimentary products, by means of rotary machines and therefore by continuous processes.

In order to allow these plastics films to adhere, there are generally used adhesives derived from polyurethane resins essentially based on polyesters and which can be either non-reactive monocomponent adhesives, such as those described in U.S. Patent No. 2,650,212 or in German Patent No. 1,165,852, or reactive

bicomponent adhesives to be mixed when used, such as those described in U.K. Patent No. 872,568.

However, both types of adhesives exhibit a common disadvantage of low adhesion value 5 minutes after the coupling (green tack), with consequent low working rates for converters, because of the long staying times before coil cutting.

To overcome the abovementioned problems, there have been suggested other types of adhesives consisting of non-reactive monocomponent systems based on polyethers and toluene diisocyanate (TDI), such as those described in U.K. Patent No. 1,401,762, or of essentially monocomponent systems based on polyethers and 4,4'-diphenylmethane diisocyanate (MDI) containing more reactive -NCO terminal groups, such as those described in Ind. and Eng. Chemistry, vol. 46, No. 7, July 1954, page 1498-1503. By these new products it was possible only to reduce but not completely overcome the problem relating to the green tack.

The present invention aims to provide a process for the preparation of polyurethane adhesives which do not exhibit the abovementioned drawbacks.

More particularly, the invention aims to provide a process for the preparation of polyurethane adhesives for packing, which when applied as monocomponent adhesives give important applicative services, particularly as to the green tack.

The present invention provides a process for the preparation of polyurethane adhesives for packing, comprising preparing a prepolymer starting from a diisocyanate of the general formula:

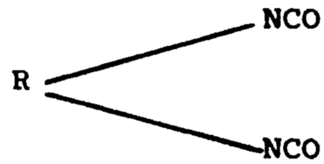

(1)

wherein R is an aromatic radical having from 1 to 13 carbon atoms and from a glycol and/or mixtures thereof having an average molecular weight (M.W) of up to 2000, and subsequently reacting the thus obtained prepolymer with a N-substituted dialkanolamine of the general formula:

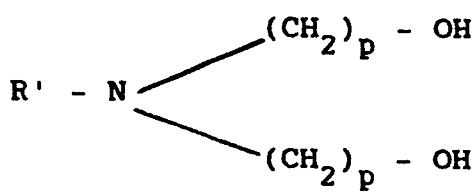

(2)

wherein R' is an alkyl, aromatic or alkylaromatic radical having from 1 to 12 carbon atoms and p is an integer from 1 to 4.

According to a preferred embodiment of the process of the present invention the diisocyanate of the general formula (1) is allowed to react with the glycol(s) at a temperature of from 50 to 110°C.

According to a further preferred embodiment, the diisocyanate and glycol(s) are allowed to react in such amounts that the ratio between the functional groups

-NCO and -OH is from 1.05 to 2, more preferably from 1.1 to 1.4.

After the end of the reaction, the prepolymer is preferably added with the dialkanolamine of general formula (2) in an amount of from 0.1 to 3% by weight, more preferably from 0.8 to 1.2%, calculated on the dry product.

The dialkanolamine may be suitably added to the reaction product at a temperature of from 40 to 80°C.

Both reactions may be performed either in solvent or without solvent. In the former case, preferred solvents are esters of aliphatic acids containing up to 3 carbon atoms with methanol and/or ethanol; the most preferred solvent is ethylacetate. In the latter case the reaction products are generally diluted before being discharged; as diluents there may be used the same esters in such an amount to have a concentration of 25 to 80%.

At the end of the reaction of the dialkanolamine with the prepolymer, one or more acid compounds may be added to improve the stability of the finished product. Examples of such acid compounds are the inorganic acids, or organic acid salts thereof, such as phosphoric acid or monoacid butylphosphate and/or diacid butyl phosphate, or also halides of organic radicals of the general formula

$$X - COR'' \qquad (3)$$

wherein

X is a halogen atom, and

R" is an aromatic or aliphatic radical containing up to 15 carbon atoms.

Diisocyanates of general formula (1) are known products which may be prepared according to known processes such as those described in Kirk Othmer Encyclopedia of Chemical Technology, vol. 13, page 789 and foll., 1981.

Preferred diisocyanates are the 2,4 and 2,6- toluene diisocyanates and mixtures thereof, the 4,4' and 2,4' methane diphenyldiisocyanates and mixtures thereof, and naphthalene-1,5-diisocyanate.

The glycols may be selected from those of very low molecular weight such as neopentylglycol, 1,6-hexanediol, ethylene glycol, 1,4-butanediol, 1,3-butanediol, diethyleneglycol, trimethylolpropane, and glycerol; or from those having a higher molecular weight, such as polycaprolactondiols of average molecular weight of from 400 to 2000, polyoxytetramethyleneglycols having a molecular weight of from 1000 to 2000, polyoxypropyleneglycols having a molecular weight of from 400 to 2000, and polyesterglycols obtained from phthalic anhydride, adipic acid, isophthalic acid, ethylene glycol, 1,4-butanediol etc. alone or in admixture, having a molecular weight of from 400 to 2000.

Preferred glycols are polyoxypropyleneglycols or mixtures thereof with 1,3-butanediol and/or trimethylolpropane.

The N-substituted dialkanolamines of general formula (2) are known products and are described in Beilstein, Organische Chemie 4, page 284. Preferred N-substituted dialkanolamines are methyl-dimethanolamine, ethyl-dimethanolamine, and ethyl-diethanolamine, and in particular methyl-diethanolamine.

The polyurethane adhesives thus obtained by the process of the invention preferably have a NCO content calculated on the dry product of less than 4%, a NCO/OH ratio of from 1.05 to 2, more preferably from 1.1 to 1.4, a viscosity (at 25°C) of from 3000 to 20,000 mPa.sec., and contain from 0.1 to 3%, more preferably from 0.8 to 1.2% by weight, of the amino derivative of general formula (2).

Polyurethane adhesives obtained in the process of the present invention, used as monocomponents, provide important applicative services, especially the green tack, which make them in some cases suitable products also for specified fields, such as plastification in the field of graphic arts, wherein the cut on line, immediately after the application of a plastics film onto a printed paper handmanufactured article, by means of adhesive, is a rewarding factor.

These same products, further characterized by a very good stability to storage, may be applied with very good results also for coupling different plastics materials and/or metallic films, which are used in flexible packing.

The invention will be further described with reference to the following illustrative Examples.

Example 1 (Comparative Example)

Into a reactor equipped with a stirrer, reflux cooler and thermometer, and under dry nitrogen, there were introduced 188.3 g of MDI (4,4'-diphenylmethanediisocyanate) which was heated up to melt it.

A mixture of polyoxypropyleneglycol of M.W. 1000 (354.7 g) and 1,3-butanediol (19.5 g) was then slowly added in such a manner that the temperature was not permitted to rise above about 100°C.

The above mentioned temperature was maintained until the content of NCO groups reached the theoretical value (3.2%) and thereafter the whole was cooled, and 187.5 g of ethylacetate (urethane degree) were added.

The characteristics of the product (Prepolymer A) were as follows:

- NCO content calculated on the dry product = 3.2%
- NCO/OH ratio = 1.32
- viscosity at 25°C = 3200mPa s
- content of dry substance = 75%

Example 2

The prepolymer A (750 g), maintained at 50°C in a reactor equipped with a stirrer and under dry nitrogen, was added with 5.63 g of methyldiethanolamine and kept under stirring for about 2 hours.

The characteristics of the product (Adhesive B) were:

- NCO content calculated on the dry product = 2.5%
- NCO/OH ratio = 1.3
- viscosity at 25°C = 13,300mPa s
- content of dry substance = 76.3%

Example 3 (Comparative Example)

Into a reactor equipped with a stirrer, reflux cooler and thermometer, and under dry nitrogen, there were introduced 180.5 g of TDI 80/20 (toluenediisocyanate 2,4/2,6) which was heated at 50°C.

A mixture consisting of 500 g of polyoxypropyleneglycol (M.W. 1000) and 32 g of 1,3-butanediol was slowly added, maintaining the temperature at not more than 80°C. The mixture was then heated at about 100°C and was maintained at this temperature until the reaction between NCO and OH was completed. Finally, the mixture was cooled by diluting with 238 g of ethylacetate(urethane degree).

The characteristics of the product (Prepolymer C) were:

- NCO content calculated on the dry product = 2.2%
- NCO/OH ratio = 1.22
- viscosity at 25°C = 500 mPa s
- content of dry substance = 75%

Example 4

Into a reactor equipped with a stirrer, reflux cooler and thermometer, and under dry nitrogen, there were introduced 145 g of TDI (80/20) and the whole was heated up to 50°C.

Thereafter, a mixture consisting of 390.8 g of polyoxypropyleneglycol (M.W. 1000) and 20.3 g of 1,3-butanediol was slowly added in such a manner as not to allow the temperature to exceed 60°C. The temperature was then raised to 100°C and maintained for about 200 minutes; at this moment, 7.1 g of methyl diethanolamine were added while maintaining the temperature at 100°C for a further 50 minutes.

The mixture was then cooled to about 75°C by adding also 188 g of ethylacetate, and then 7.5 cc of a 20% $H_3PO_4$ solution in ethylacetate were added together with a further 115 g of ethylacetate.

The characteristics of the product (Adhesive D) were:

- NCO content calculated on the dry product = 2.4%
- NCO/OH ratio = 1.24
- viscosity at 25°C = 4000 mPa s
- content of dry substance = 65.7%

In Table 1 below the values of the main applicative characteristics of the products A, B, C and D are given.

From the data given in the Table 1 the stability of the products ready for use is acceptable whereas tack

improvements (especially green tack, that is 5 minutes after the application) is apparent.

The parameter "tack", measured by a peeling test, ASTM D 1876, is the load expressed in grams necessary to separate, at a speed of 100 mm/min, two films of plastics material (one of oriented polypropylene and one of non-oriented polypropylene both having a thickness of about 50 µ) the width of which is 15 mm, joined with about 1-1.5 $g/m^2$ of dry adhesive.

**TABLE 1**

**APPLICATIVE CHARACTERISTICS**

| | Stability of the diluted product (hours) | Dry product to be applied (%) | Application viscosity at 25°C (1) $^c$Fn4 (sec) | mPa. | Tack after 5 minutes (g/15mm) | Tack after 24 hrs (g/15mm) | Tack after 3 days (g/15mm) |
|---|---|---|---|---|---|---|---|
| Prepolymer A | > 24 | 25 | 11.5 | 5.5 | 0 | 80 | 150 |
| Adhesive B | > 24 | 25 | 13.5 | 17.0 | 190 | greater than the tensile stress of the specimen | |
| Prepolymer C | > 24 | 25 | 11 | 2.5 | 0 | 30 | 90 |
| Adhesive D | > 24 | 25 | 12 | 8.5 | 50 | 100 | 180 |

(1) pot ford 4 viscosity (ASTM D 1200)

CLAIMS:

1. A process for the preparation of a polyurethane adhesive for packing, characterized by preparing a prepolymer starting from a diisocyanate of general formula

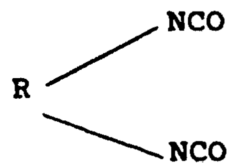

(1)

wherein R is an aromatic radical having from 1 to 13 carbon atoms and from a glycol or glycols having an average molecular weight of up to 2000, and reacting the prepolymer with a N-substituted dialkanolamine of general formula

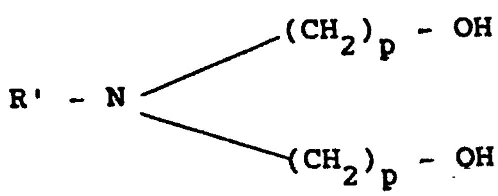

(2)

wherein R' is an alkyl, aromatic or alkylaromatic radical having from 1 to 12 carbon atoms and p is an integer from 1 to 4.

2. A process as claimed in claim 1, characterized in that the diisocyanate of formula (1) is allowed to react with a glycol or glycols at a temperature of from 50 to 110°C.

3. A process as claimed in claim 1 or 2, characterized in that the diisocyanate and glycol(s) are allowed to react in such amounts that the ratio between the functional groups -NCO and -OH is from 1.05 to 2, preferably from 1.1 to 1.4.

4. A process as claimed in any of claims 1 to 3, characterized in that the dialkanolamine of general formula (2) is added in an amount of from 0.1 to 3% by weight, preferably from 0.8 to 1.2%, calculated on the dry product.

5. A process as claimed in any of claims 1 to 4, characterized in that the dialkanolamine is added to the prepolymer at a temperature of from 40 to 80°C.

6. A process as claimed in any of claims 1 to 5, characterized in that both said reactions are carried out in a solvent.

7. A process as claimed in claim 6, characterized in that the solvent is selected from esters of aliphatic acids containing up to 3 carbon atoms with methanol and/or ethanol.

8. A process as claimed in any of claims 1 to 7, characterized in that, at the end of the reaction between the dialkanolamine and the prepolymer, one or more acid compounds are added.

9. A process as claimed in claim 8, characterized in that the acid compound is selected from inorganic acids, organic salts thereof such as phosphoric acid or monoacid and/or diacid butyl phosphate, and halides of acid organic radicals of general formula

$$X - COR'' \qquad (3)$$

wherein X is halogen and R" is an aromatic or aliphatic radical containing up to 15 carbon atoms.

10. A process as claimed in any of claims 1 to 9, characterized in that the diisocyanate of general formula (1) is selected from 2,4 and 2,6-toluene diisocyanate and mixtures thereof, 4,4' and 2,4'-methane diphenyldiisocyanate and mixtures thereof, and naphthalene-1,5-diisocyanate.

11. A process as claimed in any of claims 1 to 10, characterized in that the N-substituted dialkanolamine is selected from methyl-dimethanolamine, ethyl-dimethanolamine, ethyl-diethanolamine and methyl-diethanolamine.

12. A polyurethane adhesive for packing, characterized by being obtained by reacting a diisocyanate of general formula

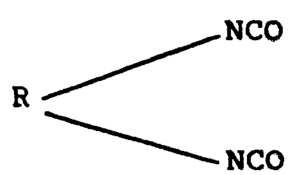

(1)

wherein R is an aromatic radical having from 1 to 13 carbon atoms with a glycol or glycols having an average molecular weight of up to 2,000, and successively reacting the prepolymer thus obtained with a N-substituted dialkanolamine of general formula

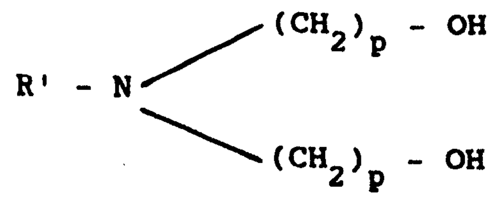

(2)

wherein R' is an alkyl, aromatic or alkyl aromatic radical having from 1 to 12 carbon atoms and p is an integer from 1 to 4, having a NCO content calculated on the dry product of less than 4%, a NCO/OH ratio of from 1.05 to 2, a viscosity of from 3,000 to 20,000 mPa sec, and containing from 0.1 to 3% by weight of the amino derivative of the general formula (2).

13. A polyurethane adhesive as claimed in claim 12, characterized by having a NCO/OH ratio of from 1.1 to 1.4 and containing from 0.8 to 1.2% by weight of the amino derivative of general formula (2).